# EUROPEAN PATENT SPECIFICATION

(11) **EP 2 003 995 B1**
(45) Date of publication and mention of the grant of the patent: **23.09.2015**
(21) Application number: 07753976.5
(22) Date of filing: 26.03.2007
(51) Int. Cl.: A21D 13/00, A23G 1/54, A23L 1/00, A23G 1/30

(54) **ANTI-SCUFF COATING FOR CHOCOLATE**
BRUCHSICHERER ÜBERZUG FÜR SCHOKOLADE
REVETEMENT ANTI-ERAFLURES POUR LE CHOCOLAT

(30) Priority: 24.03.2006 US 785549 P
(43) Date of publication of application: 24.12.2008
(60) Divisional application: 13187968.6
(73) Proprietor: Mantrose-Haeuser Co. Inc., Attleboro, MA 02703 (US)
(72) Inventor: ZHONG, Bin, Cumberland, RI 02862 (US); MCWEENEY, Margo, East Boston, MA 02128 (US); SANTOS, Stephen, A., Cumberland, RI 02864 (US); MCGREGOR, Alan, Scotland, FK4 1PD (GB)
(74) Representative: Stuart, Ian Alexander
(86) International application number: PCT/US2007/007393
(87) International publication number: WO 2007/112077

(56) References cited:
- EP-A1- 0 988 801
- WO-A1-2006/040127
- DE-A1- 19 503 670
- FR-A1- 2 689 376
- JP-A- 6 157 325
- US-A1- 2004 103 821
- US-B2- 6 869 628

## Description

### FIELD OF THE INVENTION

The present invention relates to the use of a coating composition for increasing scuff resistance of a surface on chocolate-coated or chocolate-enrobed products biscuits and cookies.

### BACKGROUND

In addition to candies or confectionaries, a number of products comprise a layer of chocolate, particularly an external layer of chocolate. These include chocolate-coated biscuits and chocolate-coated cookies. During processing, packaging, storage and/or transport of these products, the external surface of the chocolate layer may become scuffed, scratched or marred, thereby reducing the consumer appeal of the product. Thus, it is desirable to improve the scuff resistance of the external surface of the chocolate layer, particularly during processing and packaging. Use of compositions that quickly produce a chocolate layer whose external surface is more resistant to scuffing, and thus reduce the amount of time required for preparing the solid chocolate or chocolate-coated product, is particularly desirable.

DE-A-195 03 670 discloses the coating of small, hard articles (such as pills and chocolate beans), inter alia to prevent abrasion, using an aqueous suspension whose main component is D-maltitol, along with gum arabic and silicic acid. FR 2 689 376 discloses the coating of chocolate coated biscuits with a protective film to avoid melting when held in the hands.

### SUMMARY OF THE INVENTION

The present invention provides use of a coating composition for increasing the scuff resistance of a surface on a chocolate-coated or chocolate-enrobed product selected from biscuits and cookies, wherein said coating composition is applied to the surface of the chocolate by spraying or enrobing, and wherein the coating composition comprises:
i) a solvent selected from water, ethanol, and isopropanol, or any combination thereof:
ii) one or more first film forming agents, wherein the one or more first film forming agents provide strength and flexibility to a film that is formed when the coating composition is dried, and wherein the coating composition which has been applied is dried to provide a chocolate-coated or chocolate-enrobed product having a surface with increased scuff resistance.

Such use provides a chocolate coated or enrobed product that is more resistant to abrasion or scuffing during processing, packaging, storage, and/or transport. Such use leads to a film or coating that cures rapidly, typically in 30 minutes or less. In certain embodiments, the film or coating cures in 15 minutes or less. In certain embodiments, the film or coating cures in 10 minutes or less. In certain embodiments, the product that is formed by the use of the present invention comprises a chocolate layer that is resistant to fat bloom. In certain embodiments, the chocolate layer whose external surface is coated also exhibits improved retention of fine detail and/ or decoration during processing and or packaging. In certain embodiments, the chocolate layer that is coated is glossy.

The use of the present invention comprises the steps of applying at least one layer of a coating composition to an external surface of chocolate in a chocolate-enrobed or chocolate-coated product, and drying the composition to provide a product comprising a chocolate layer whose external surface comprises a dried film of the coating composition. The external surface of a chocolate layer that is so treated is more resistant to scuffing or abrasion than a chocolate layer whose external surface does not comprise the dried film. The coating composition that is used in the present invention includes a solvent selected from water, one or more low molecular weight alcohols selected from ethanol and isopropanol, and any mixture thereof. It further includes at least one first film forming agent that imparts flexibility and strength to the dried coating. The composition may further comprise one or more second film forming agents which increase the solids content of the coating composition, and/or alter the glossiness of the dried coating, in addition to imparting flexibility and strength to the dried coating.

In certain embodiments, particularly those in which the coating composition contains water and no alcohol, the coating composition contains a wetting agent or surfactant. In certain embodiments, particularly where the coating composition is water-based, the coating composition also contains a preservative.

In certain embodiments, the coating composition contains colorants that produce a chocolate-colored coating on the surface of the chocolate. In other embodiments, the coating composition contains colorants that produce a colored coating that is not a chocolate color. In other embodiments, the coating composition lacks colorants. The dried coatings that are produced using such a coating composition, preferably, are transparent or semi-transparent, as determined visually.

### DESCRIPTION OF THE EMBODIMENTS

The present invention concerns the use of compositions for improving the scuff resistance of the surface on a chocolate-coated, or chocolate-enrobed product selected from chocolate-coated or chocolate-enrobed biscuits and cookies. The term "chocolate" as used herein refer to all chocolate or chocolate-like compositions with a temperable fat phase. The term is intended to include all chocolate and chocolate-like compositions that contain at least one cocoa or cocoa-like component. The term is intended, for example, to include standardized and non-standardized chocolates, i.e., including chocolates with compositions conforming to the U.S. Standards Of Identity (SOI) and compositions not conforming to the U.S. Standards Of Identity, respectively, including dark chocolate, baking chocolate, milk chocolate, sweet chocolate, semi-sweet chocolate, buttermilk chocolate, skim-milk chocolate, mixed dairy product chocolate, low fat chocolate, white chocolate, non-standardized chocolates and chocolate-like compositions, unless specifically identified otherwise.

The use according to the present invention comprises the steps of applying at least one layer of a coating composition to an external surface of the chocolate layer of the product, and drying the coating composition to provide a film or coating which imparts improved scuff-resistance to the external surface of the chocolate layer. The coating compositions used in the present invention include a solvent selected from water, a low molecular weight alcohol selected from isopropanol and preferably, ethanol and mixtures thereof, and at least one film forming agent that provides a dried coating that is flexible and more resistant to scuffing or scratching than the underlying chocolate surface. In certain embodiments, the dried coating has sufficient flexibility to not crack even when the coating is applied to sharp edges.

The coating composition preferably comprises one or more of the following film forming agents as the "first film forming agents": xanthan gum, gum arabic, guar gum, locust bean gum, agar, alginates, gum ghatti, gum karaya, gum tragacanth, chitosan, carageenans, methylcellulose, carboxymethylcellulose, hydroxypropyl methylcellulose, ethylcellulose, hydroxypropyl cellulose, pectin, gelatin, modified starch, dextrin, zein, and whey protein. In certain embodiments, the coating composition comprises shellac, as a first film forming agent. In certain embodiments, the first film forming agent is one or more of the following: xanthan gum, gum Arabic, hydoxypropyl cellulose, ethyl cellulose, modified starch, dextrin, zein, and whey protein. In certain embodiments, particularly where the coating composition comprises water, the first film forming agent is one or more of the following: xanthan gum, gum Arabic, guar gum, locust bean gum, agar, alginates, gum ghatti, gum karaya, gum tragacanth, chitosan, carageenans, methylcellulose, carboxymethylcellulose, hydroxypropyl methylcellulose, hydroxypropyl cellulose, pectin, gelatin, modified starch, dextrin and whey protein. In certain embodiments, particularly, where the coating composition comprises ethanol, isopropanol or both, the first film forming agent is one or more of the following: ethylcellulose, hydroxypropyl cellulose, zein, and shellac.

In certain embodiments, particularly those in which the coating composition comprises water, the coating composition further comprises one or more additional film forming agents, referred to hereinafter collectively as "second film forming agents". The second film forming agents are used to increase the solids content of the composition, to produce a coating composition that dries quickly, and/or to adjust the glossiness of the dried coating. In one embodiment, the second film forming agent comprises maltodextrin. In other embodiments, the second film forming agent comprises one or more of starch, sucrose, maltose, fructose, dextrose, glucose, and corn syrup, or any combination of these ingredients and/or maltodextrin.

In certain embodiments, particularly those in which the solvent comprises water, the coating composition may also comprise a wetting agent or surfactant. Examples of suitable wetting agents or surfactants include, but are not limited to, glycerol monoleate, polyoxyethylene (20) sorbitan monoleate, polyoxyethylene (20) sorbitan monostearate, polyoxyethylene (20) sorbitan tristearate, sorbitan monostearate, sorbitan monooleate, sorbitan monolaurate, sorbitan monopalmitate, glycerol monostearate, sorbitan tristearate, sorbitan trioleate, lecithin, and a sugar ester.

In certain embodiments, particularly those in which the solvent comprises an alcohol, it is preferred that alcohol be a denatured alcohol. Agents which can be used to denature alcohols such as ethanol include, but are not limited to, acetone, ethyl acetate, shellac and isopropanol. Thus, in certain embodiments the coating composition may contain acetone and ethyl acetate, and/or shellac as well as ethanol and/or isopropanol. Any agent which is used in the food industry to denature alcohol may be included in the composition.

In certain embodiments, particularly those in which the solvent comprises water, the composition may also include a preservative. Examples of such preservatives include, but are not limited to, citric acid, potassium sorbate, sodium benzoate, or any combination thereof.

In certain embodiments, the composition contains colorants that impart a chocolate color to the coating. Good results have been obtained using a red dye such as FD& C Red # 40, a yellow dye such as FD& C Yellow # 5, a blue dye such as FD&C Blue #1 and a yellow dye such as FD& C yellow # 6. Examples of other colorants that can be used to produce a chocolate colored coating include, but are not limited to, FD&C Red # 40 aluminum lake, FD&C Yellow # 5 aluminum lake, FD&C blue # 1 aluminum lake, and FD&C Yellow # 6 aluminum lake. The amount of colorants used in the composition depends upon the desired color and ranges from 0 to 30 weight percent of the composition. In certain embodiments, the composition comprises colorants, such as titanium dioxide, that impart a different color to the coating. In certain embodiments, the composition lacks or is free of colorants.

In certain embodiments, particularly those in which the composition is primarily water-based, the coating composition comprises from 30 to 99 weight percent of water, from 0.01 to 40 weight percent of a first film forming agent, from 0.01 to 40 weight percent of a second film forming agent, from 0.01 to 5 weight percent of a surfactant and, from 0 to 2 weight percent of a preservative. In certain embodiments, particularly those in which the solvent comprises water, the coating composition comprises from 30 to 99 weight percent of water, from 0.01 to 50 weight percent of a first film forming agent, from 0 to 50 weight percent of a second film forming agent, from 0.01 to 5 weight percent of a surfactant and, from 0 to 2 weight percent of a preservative.

In certain embodiments where the composition is primarily water-based, the coating composition comprises 0.02 % by weight or more of the first film forming agent. In certain embodiments where the composition is primarily water-based, the coating composition comprises 0.05 % by weight or more of the first film forming agent. In certain embodiments where the composition is primarily water-based, the coating composition comprises 0.1 % by weight or more of the first film forming agent. In certain embodiments where the composition is primarily water-based, the coating composition comprises 0.2 % by weight or more of the first film forming agent. In certain embodiments where the composition is primarily water-based, the coating composition comprises 1.0 % by weight or more of the first film forming agent. In certain embodiments where the composition is primarily water-based, the coating composition comprises 35% by weight or less of the first film forming agent. In certain embodiments where the composition is primarily water-based, the coating composition comprises 30% by weight or less of the first film forming agent.

In certain embodiments where the composition is primarily water-based, the coating composition comprises 0.02 % by weight or more of the second film forming agent. In certain embodiments where the solvent comprises water, the coating composition comprises 0.05 % by weight or more of the second film forming agent. In certain embodiments where the composition is primarily water-based, the coating composition comprises 0.1 % by weight or more of the second film forming agent. In certain embodiments where the composition is primarily water-based, the coating composition comprises 0.2 % by weight or more of the second film forming agent. In certain embodiments where the composition is primarily water-based, the coating composition comprises 1.0 % by weight or more of the second film forming agent. In certain embodiments where the composition is primarily water-based, the coating composition comprises 5 to 35% by weight of the second film forming agent. In certain embodiments where the composition is primarily water-based, the coating composition comprises 5- 30% by weight of the second film forming agent.

In certain embodiments where the coating composition is primarily alcohol-based, the composition comprises from 60 to 99.9%, preferably from 70 to 99%, by weight of alcohol, from 0.01 to 40% by weight of the first film forming agent, and from 0 to 35% by weight of the second film forming agent. In certain embodiments where the composition is primarily alcohol-based, the coating composition comprises 0.02 % by weight or more of the first film forming agent. In certain embodiments where the composition is primarily alcohol-based, the coating composition comprises 0.05 % by weight or more of the first film forming agent. In certain embodiments where the composition is primarily alcohol-based, the coating composition comprises 0.1 % by weight or more of the first film forming agent. In certain embodiments where the composition is primarily alcohol-based, the coating composition comprises 0.2 % by weight or more of the first film forming agent. In certain embodiments where the composition is primarily alcohol-based, the coating composition comprises 1.0 % by weight or more of the first film forming agent. In certain embodiments, where the composition is primarily alcohol-based, the coating composition comprises 35% by weight or less of the first film forming agent. In certain embodiments where the composition is primarily alcohol-based, the coating composition comprises 30% by weight or less of the first film forming agent.

In certain embodiments, where the solvent is a mixture of water and alcohol, the coating composition comprises from 30 to 99.9% by weight of the solvent, from 0.01 to 40% by weight of the first film forming agent, from 0 to 40% by weight of the second film forming agent, from 0 to 5 % by weight of surfactant, and from 0 to 2% by weight of a preservative. In certain embodiments, where the solvent is a mixture of water and alcohol, the coating composition comprises from 30 to 99.9% by weight of the solvent, from 0.01 to 50% by weight of the first film forming agent, from 0 to 50% by weight of the second film forming agent, from 0 to 5 % by weight of surfactant, and from 0 to 2% by weight of a preservative.

The coating composition preferably has a solids content of from 0.1 to 70 weight percent, preferably from 1.0 to 70 weight percent. In certain embodiments, the coating composition has a solids content of 60 weight percent or less. In certain embodiments in which the composition is primarily alcohol-based, the coating composition has a solids content of 40%, preferably, 35% by weight or less. In certain embodiments in which the composition is primarily water-based, the coating composition has a solids content of 20% by weight or more. In certain embodiments, the coating composition that is used in the present methods has a viscosity of 2000 centipoise or less. In certain embodiments, the coating composition has a viscosity of from 10 to 1500 centipoise. In certain embodiments, the coating composition has a viscosity of from 100 to 1500 centipoise. In certain embodiments, the coating composition has a viscosity of from 100 to 1200 centipoise.

### Method of Preparation

The preparation of the composition involves dissolving the first film forming agent in the solvent. In those embodiments where the solvent is mostly or entirely water, the solvent is generally first heated to a temperature of from 40-80°C, preferably from 60-70°C. In certain embodiments, particularly when the composition is a water-based formulation, a surfactant and the second film forming agent are then added to the heated mixture. Once all of the additives are dissolved in the solvent, the mixture is cooled to a temperature of 25-40°C, preferably from 25-30°C, and the colorants, if being used, are dispersed in the solution. The preservative, if being used, is also added to the cooled solution/dispersion.

The coating composition is applied to the solid chocolate or chocolate-coated, or chocolate-enrobed product by spraying the composition on the surface of the chocolate or by enrobing the solid chocolate or chocolate coated product in the composition at room temperature. The coating composition, preferably, is applied at a thickness of from greater than 0 to 50 mil (1.27 mm). The coating is then dried, preferably in air at a temperature below 65°F (18°C) and a relative humidity of less than 50%. A faster drying or cure can be achieved using a number of techniques including, but not limited to, drying the coating composition in moving or blowing air. A faster drying or cure of the coating composition can also be achieved by subjecting the coated product to infrared (IR)radiation for 1-30 seconds prior to drying. In those instances where IR radiation is used to dry the coating, it is preferred that the coating be colored, preferably chocolate colored.

### Characteristics of the Coating or Film

The dried coating or film that is formed on the surface of the chocolate may comprise one or more layers of the coating composition The dried coating, preferably, is smooth and uniform without foreign flavors. The gloss of the dried coating can be altered based on the film former or combination of film forming agents used. The dried coating provides a product having an external chocolate surface that is more resistant to scuffing than a chocolate surface that lacks such a dried film or coating.

### Methods of Testing Scuff Resistance of the Coated Chocolate Layer

The anti-scuffing characteristics of the dried coating may be assayed by placing solid chocolate products or chocolate-covered products that have been coated in accordance with the present method (test products) or that have not been coated (control products) in a container such as a bottle, attaching the container to a wheel, rotating the wheel for a set period of time, e.g. one minute, and then visually inspecting the outer surface of the test products and control products. Good results have been obtained using a wheel that has a diameter of about 18 inches (45 cm), a revolving speed of about 30 cycles/minute, and a test period of about 1 minute. As shown in the examples below, this assay can clearly differentiate the anti-scuffing resistance of chocolate coated biscuit comprising a coating prepared in accordance with the present invention from a chocolate coated biscuit that has not been coated. Other methods that are within the capabilities of those of ordinary skill in the art may also be used to assay the scuff resistance of the coated and uncoated chocolate surfaces of the test and control products.

### EXAMPLES

The following examples are for purposes of illustration only and are not intended to limit the scope of the claims which are appended hereto.

### Example 1

A coating composition for chocolate was prepared using the following ingredients.

| | |
|---|---|
| Water | 78.2% |
| Maltodextrin | 20.0% |
| Xanthan Gum | 0.2% |
| Glycerol monooleate | 1.0% |
| Citric acid | 0.5% |
| Potassium sorbate | 0.1% |

To prepare the coating composition, the water was first heated to 70°C and the first film forming agent, xanthan gum, dissolved in the heated water. Thereafter, maltodextrin, the second film forming agent, and the surfactant were added to the mixture. Once the additives had dissolved in the water, the solution was cooled to a temperature of about 25°C and the preservatives were dissolved in the solution.

The coating composition was applied and dried in air at a temperature below 65°F and a relative humidity of less than 50%. The coating dried within 10 to 15 minutes. The resistance to abrasion was tested as described above. The results showed that biscuits comprising an external chocolate layer coated in accordance with the present method had little scuff as compared to biscuits whose chocolate layer lacked the coating.

### EXAMPLE 2

A coating composition for chocolate was prepared using the following ingredients.

| | |
|---|---|
| Water | 78.2202% |
| Maltodextrin | 19.9440% |
| Xanthan Gum | 0.1994% |
| Glycerol monooleate | 0.9972% |
| Citric acid | 0.4986% |
| Potassium sorbate | 0.0997% |
| FD&C Red #40 | 0.0182% |
| FD&C Yellow #5 | 0.0174% |
| FD&C Blue #1 | 0.0029% |
| FD&C Yellow #6 | 0.0025% |

To prepare the coating composition, the water was first heated to 70°C and the first film forming agent, xanthan gum, dissolved in the heated water. Thereafter, maltodextrin, the second film forming agent, and the surfactant were added to the mixture. Once the additives had dissolved in the water, the solution was cooled to a temperature of about 25°C and the colorants and preservatives were dissolved in the solution.

The coating compositions was applied to chocolate covered biscuits, and dried in air at a temperature below 65°F (18°C) and a relative humidity of less than 50%. The coating dried within 10 to 15 minutes. The resistance to abrasion was tested as described above. The results showed that biscuits comprising an external chocolate layer coated in accordance with the present method had little scuff as compared to biscuits whose chocolate layer lacked the coating.

### EXAMPLE 3

A coating composition for chocolate was prepared using the following ingredients.

| | |
|---|---|
| Hydroxypropylcellulose | 2% |
| Denatured alcohol | 98% |

To prepare the composition, hydroxypropylcellulose was dissolved in the denatured alcohol at room temperature. The coating composition was applied to chocolate covered biscuits, and dried and dried in air at a temperature below 65°F and a relative humidity of less than 50%. The coating dried within 3 to 8 minutes. The resistance to abrasion was tested as described above. The results showed that biscuits comprising a chocolate layer coated in accordance with the present method had little scuff as compared to biscuits whose chocolate layer lacked the coating.

### EXAMPLE 4

A coating composition for chocolate was prepared using the following ingredients.

| | |
|---|---|
| Shellac | 5% |
| Hydroxypropylcellulose | 3% |
| Denatured alcohol | 92% |

To prepare the composition, shellac and hydroxypropylcellulose were dissolved in the denatured alcohol at room temperature.

The coating composition was applied to chocolate covered biscuits, and dried in air at a temperature below 65°F and a relative humidity of less than 50%. The coating dried within 3 to 8 minutes. The resistance to abrasion was tested as described above. The results showed that biscuits comprising a chocolate layer coated in accordance with the present method had little scuff as compared to biscuits whose chocolate layer lacked the coating.

## Claims

1. Use of a coating composition for increasing the scuff resistance of a surface on a chocolate-coated or chocolate-enrobed product selected from biscuits and cookies, wherein said coating composition is applied to the surface of the chocolate by spraying or enrobing, and wherein the coating composition comprises:
i) a solvent selected from water, ethanol, and isopropanol, or any combination thereof:
ii) one or more first film forming agents, wherein the one or more first film forming agents provide strength and flexibility to a film that is formed when the coating composition is dried, and wherein the coating composition which has been applied is dried to provide a chocolate-coated or chocolate-enrobed product having a surface with increased scuff resistance.

2. Use according to claim 1 wherein the product is a biscuit.

3. The use of claim 1 or 2, wherein at least one of the first film forming agents is shellac.

4. The use of claim 1 or 2, wherein the one or more first film forming agents are selected from xanthan gum, gum Arabic, guar gum, locust bean gum, agar, alginates, gum ghatti, gum karaya, gum tragacanth, chitosan, carageenans, methylcelluose, ethylcellulose, carboxymethylcellulose, hydroxypropyl methylcellulose, hydroxypropyl cellulose, pectin, gelatin, modified starch, dextrin, zein, and whey protein, or any combination thereof.

5. The use of any preceding claim, wherein the coating composition is applied at a thickness of from greater than 0 to 50 mil, (0 to 1.27mm) and wherein the coating composition dries within 30 minutes or less when exposed to drying air.

6. The use of any preceding claim, wherein the coating composition further comprises one or more second film forming agents selected from the group consisting of maltodextrin, starch, sucrose, maltose, fructose, dextrose, glucose, sugar polyols, and corn syrup, or any combination thereof.

7. The use of any preceding claim, wherein the coating composition comprises a surfactant, and, optionally a preservative.

8. The use of claim 1 or 2, wherein the composition comprises water and one or more of the following: xanthan gum, gum Arabic, guar gum, locust bean gum, agar, alginates, gum ghatti, gum karaya, gum tragacanth, chitosan, carageenans, methylcellulose, carboxymethylcellulose, hydroxypropyl methylcellulose, hydroxypropyl cellulose, pectin, gelatin, modified starch, dextrin and whey protein.

9. The use of claim 1 or 2, wherein the composition comprises ethanol, isopropanol or both, and one or more of the following: ethylcellulose, hydroxypropyl cellulose, zein, and shellac.

10. The use of claim 1 or 2 wherein the coating composition includes:
i) one or more first film forming agents selected from the group consisting of xanthan gum, gum arabic, guar gum, locust bean gum, agar, alginates, gum ghatti, gum karaya, gum tragacanth, chitosan, carageenans, methylcellulose, ethylcellulose, carboxymethylcellulose, hydroxpropyl methylcellulose, hydroxypropyl cellulose, pectin, gelatin, modified starch, dextrin, zein, shellac and whey protein; and optionally
ii) one or more second film forming agents selected from the group consisting of maltodextrin, starch, sucrose, maltose, fructose, dextrose, glucose, and corn syrup; wherein (A) if the solvent is water, the second film forming agent constitutes 5 to 35% by weight of the coating composition; (B) if the solvent is alcohol, the composition comprises 60-99.9% by weight of alcohol, 0.01 to 40% by weight of the first film-forming agent, and 0 to 35% by weight of the second film-forming agent; and (C) if the solvent is a mixture of water and alcohol; the composition comprises from 30-99.9% by weight of the solvent, 0.01 to 40% by weight of the first film-forming agent, 0 to 40% by weight of the second film forming agent, 0 to 5% by weight of a surfactant and from 0 to 2% by weight of a preservative.

11. The use of claim 1, wherein the coating composition further comprises colorants that produce a chocolate colored or other colored film when the coating is dried.

12. The use of claim 1, wherein the coated product is subjected to infrared radiation.

13. The use of claim 1, wherein step (b) comprises a step of drying the coating composition in air having a temperature of less than 65°C and a relative humidity of less than 50%.

14. The use of claim 1, wherein the coating composition lacks colorants, and the film that is formed when the coating composition dries is transparent or semi-transparent.

15. The use of claim 1, wherein the coating composition has a solids content of 0.1 to 70 weight percent, preferably 1.0 to 70 weight percent, more preferably 1.0 to 60 weight percent.

16. The use of claim 1, wherein the coating composition has a viscosity of 10 to 1500 centipoise, preferably 100 to 1500 centipoise, more preferably 100 to 1200 centipoise.

## Patentansprüche

1. Verwendung einer Beschichtungszusammensetzung zur Steigerung der Ab-riebfestigkeit einer Oberfläche eines mit Schokolade beschichteten oder mit Schokolade überzogenen Produkts, das aus Plätzchen bzw. Keks und Cookies ausgewählt ist, worin die Beschichtungszusammensetzung auf die Oberfläche der Schokolade durch Aufsprühen oder Überziehen aufgebracht wird und worin die Beschichtungszusammensetzung Folgendes umfasst:
i) ein Lösungsmittel, das aus Wasser, Ethanol und Isopropanol oder einer beliebigen Kombination davon ausgewählt ist;
ii) ein oder mehrere erste Filmbildungsmittel, worin das eine oder die mehreren ersten Filmbildungsmittel einem Film, der bei Trocknen der Beschichtungszusammensetzung ausgebildet wird, Festigkeit und Flexibilität verleihen und worin die Beschichtungszusammensetzung, die aufgebracht wurde, getrocknet wird, um ein schokoladebeschichtetes oder schokoladeüberzogenes Produkt mit einer Oberfläche mit erhöhter Abriebfestigkeit bereitzustellen.

2. Verwendung nach Anspruch 1, worin das Produkt ein Plätzchen bzw. Keks ist.

3. Verwendung nach Anspruch 1 oder 2, worin zumindest eines der ersten Filmbildungsmittel Schellack ist.

4. Verwendung nach Anspruch 1 oder 2, worin das eine oder die mehreren ersten Filmbildungsmittel aus folgenden ausgewählt sind: Xanthangummi, Gummi arabicum, Guargummi, Johannisbrotbaumgummi, Agar, Alginaten, Ghatti-Gummi, Karayagummi, Gummitragant, Chitosan, Carageenanen, Methylcellulose, Ethylcellulose, Carboxymethylcellulose, Hydroxypropylmethylcellulose, Hydroxypropylcellulose, Pektin, Gelatine, modifizierte Stärke, Dextrin, Zein und Molkeprotein oder einer beliebigen Kombination davon.

5. Verwendung nach einem der vorangegangenen Ansprüche, worin die Beschichtungszusammensetzung in einer Dicke von mehr als 0 bis 50 mil (0 bis 1,27 mm) aufgebracht wird und worin die Beschichtungszusammensetzung innerhalb von 30 min oder weniger trocknet, wenn sie Trocknungsluft ausgesetzt wird.

6. Verwendung nach einem der vorangegangenen Ansprüche, worin die Beschichtungszusammensetzung weiters einen oder mehrere zweite Filmbildungsmittel umfasst, die aus der aus folgenden bestehenden Gruppe ausgewählt sind: Maltodextrin, Stärke, Saccharose, Maltose, Fructose, Dextrose, Glukose, Zuckerpolyole und Maissirup oder einer beliebigen Kombination davon.

7. Verwendung nach einem der vorangegangenen Ansprüche, worin die Beschichtungszusammensetzung ein Tensid und gegebenenfalls ein Konservierungsmittel umfasst.

8. Verwendung nach Anspruch 1 oder 2, worin die Zusammensetzung Wasser und ein oder mehrere der folgenden umfasst: Xanthangummi, Gummi arabicum, Guargummi, Johannisbrotbaumgummi, Agar, Alginate, Ghatti-Gummi, Karayagummi, Gummitragant, Chitosan, Carageenane, Methylcellulose, Carboxymethylcellulose, Hydroxypropylmethylcellulose, Hydroxypropylcellulose, Pektin, Gelatine, modifizierte Stärke, Dextrin und Molkeprotein.

9. Verwendung nach Anspruch 1 oder 2, worin die Beschichtungszusammensetzung Ethanol, Isopropanol oder beides und eines oder mehrere der folgenden umfasst: Ethylcellulose, Hydroxypropylcellulose, Zein und Schellack.

10. Verwendung nach Anspruch 1 oder 2, worin die Beschichtungszusammensetzung Folgendes umfasst:
i) ein oder mehrere erste Filmbildungsmittel, die aus der aus folgenden bestehenden Gruppe ausgewählt sind: Xanthangummi, Gummi arabicum, Guargummi, Johannisbrotbaumgummi, Agar, Alginate, Ghatti-Gummi, Karayagummi, Gummitragant, Chitosan, Carageenane, Methylcellulose, Ethylcellulose, Carboxymethylcellulose, Hydroxypropylmethylcellulose, Hydroxypropylcellulose, Pektin, Gelatine, modifizierte Stärke, Dextrin, Zein, Schellack und Molkeprotein; und gegebenenfalls
ii) ein oder mehrere zweite Filmbildungsmittel, die aus der aus folgenden bestehenden Gruppe ausgewählt sind: Maltodextrin, Stärke, Saccharose, Maltose, Fructose, Dextrose, Glukose und Maissirup; worin (A), wenn das Lösungsmittel Wasser ist, das zweite Filmbildungsmittel 5 bis 35 Gew.-% der Beschichtungszusammensetzung ausmacht; (B), wenn das Lösungsmittel Alkohol ist, die Zusammensetzung 60 bis 99,9 Gew.-% Alkohol, 0,01 bis 40 Gew.-% des ersten Filmbildungsmittels und 0 bis 35 Gew.-% des zweiten Filmbildungsmittels umfasst; und (C), wenn das Lösungsmittel ein Gemisch von Wasser und Alkohol ist, die Zusammensetzung 30 bis 99,9 Gew.-% des Lösungsmittels, 0,01 bis 40 Gew.-% des ersten Filmbildungsmittels, 0 bis 40 Gew.-% des zweiten Filmbildungsmittels, 0 bis 5 Gew.-% eines Tensids und 0 bis 2 Gew.-% eines Konservierungsmittels umfasst.

11. Verwendung nach Anspruch 1, worin die Beschichtungszusammensetzung ferner Farbstoffe umfasst, die einen schokolade- oder andersfarbigen Film erzeugen, wenn die Beschichtung getrocknet wird.

12. Verwendung nach Anspruch 1, worin das beschichtete Produkt Infrarotstrahlung ausgesetzt wird.

13. Verwendung nach Anspruch 1, worin Schritt (b) einen Schritt zum Trocknen der Beschichtungszusammensetzung an Luft mit einer Temperatur von weniger als 65 °C und einer relativen Luftfeuchtigkeit von weniger als 50 % umfasst.

14. Verwendung nach Anspruch 1, worin die Beschichtungszusammensetzung keine Farbstoffe aufweist und der Film, der ausgebildet wird, wenn die Zusammensetzung trocknet, transparent oder semitransparent ist.

15. Verwendung nach Anspruch 1, worin die Beschichtungszusammensetzung einen Feststoffgehalt von 0,1 bis 70 Gew.-%, vorzugsweise von 1,0 bis 70 Gew.-%, noch bevorzugter von 1,0 bis 60 Gew.-%, aufweist.

16. Verwendung nach Anspruch 1, worin die Beschichtungszusammensetzung eine Viskosität von 10 bis 1500 Centipoise, vorzugsweise von 100 bis 1500 Centipoise und noch bevorzugter von 100 bis 1200 Centipoise, aufweist.

## Revendications

1. Utilisation d'une composition de revêtement pour augmenter la résistance aux éraflures d'une surface sur un produit revêtu de chocolat ou enrobé de chocolat choisi parmi les biscuits et les petits gâteaux, dans laquelle ladite composition de revêtement est appliquée sur la surface du chocolat par pulvérisation ou enrobage, et dans laquelle la composition de revêtement comprend :
i) un solvant choisi parmi l'eau, l'éthanol et l'isopropanol, ou l'une quelconque de leurs combinaisons :
ii) un ou plusieurs premiers agents filmogènes, dans laquelle le ou les premiers agents filmogènes confèrent résistance et flexibilité à un film qui est formé lorsque la composition de revêtement est séchée, et dans laquelle la composition de revêtement qui a été appliquée est séchée pour donner un produit revêtu de chocolat ou enrobé de chocolat dont la surface présente une résistance accrue aux éraflures.

2. Utilisation selon la revendication 1 dans laquelle le produit est un biscuit.

3. Utilisation selon la revendication 1 ou 2, dans laquelle au moins l'un des premiers agents filmogènes est une gomme laque.

4. Utilisation selon la revendication 1 ou 2, dans laquelle le ou les premiers agents filmogènes sont choisis parmi la gomme xanthique, la gomme arabique, la gomme de guar, la gomme de caroube, l'agar-agar, les alginates, la gomme ghatti, la gomme karaya, la gomme adragante, le chitosane, les carraghénines, la méthylcelluose, l'éthylcellulose, la carboxyméthylcellulose, l'hydroxypropylméthylcellulose, l'hydroxypropylcellulose, la pectine, la gélatine, l'amidon modifié, la dextrine, la zéine et la protéine lactosérique, ou l'une quelconque de leurs combinaisons.

5. Utilisation selon l'une quelconque des revendications précédentes, dans laquelle la composition de revêtement est appliquée en une épaisseur de plus de 0 à 50 mil, (de 0 à 1,27 mm) et dans laquelle la composition de revêtement sèche en 30 minutes ou moins lorsqu'elle est exposée à de l'air de séchage.

6. Utilisation selon l'une quelconque des revendications précédentes, dans laquelle la composition de revêtement comprend en outre un ou plusieurs seconds agents filmogènes choisis dans le groupe constitué de la maltodextrine, de l'amidon, du sucrose, du maltose, du fructose, du dextrose, du glucose, des polyols sucrés et du sirop de maïs, ou de l'une quelconque de leurs combinaisons.

7. Utilisation selon l'une quelconque des revendications précédentes, dans laquelle la composition de revêtement comprend un tensioactif et facultativement un agent de conservation.

8. Utilisation selon la revendication 1 ou 2, dans laquelle la composition comprend de l'eau et un ou plusieurs des composés suivants : gomme xanthique, gomme arabique, gomme de guar, gomme de caroube, agar-agar, alginates, gomme ghatti, gomme karaya, gomme adragante, chitosane, carraghénines, méthylcellulose, carboxyméthylcellulose, hydroxypropylméthylcellulose, hydroxypropylcellulose, pectine, gélatine, amidon modifié, dextrine et protéine lactosérique.

9. Utilisation selon la revendication 1 ou 2, dans laquelle la composition comprend de l'éthanol, de l'isopropanol ou les deux, et un ou plusieurs des composés suivants : éthylcellulose, hydroxypropylcellulose, zéine et gomme laque.

10. Utilisation selon la revendication 1 ou 2 dans laquelle la composition de revêtement comprend :
i) un ou plusieurs premiers agents filmogènes choisis dans le groupe constitué de la gomme xanthique, de la gomme arabique, de la gomme de guar, de la gomme de caroube, de l'agar-agar, des alginates, de la gomme ghatti, de la gomme karaya, de la gomme adragante, du chitosane, des carraghénines, de la méthylcellulose, de l'éthylcellulose, de la carboxyméthylcellulose, de l'hydroxypropylméthylcellulose, de l'hydroxypropylcellulose, de la pectine, de la gélatine, de l'amidon modifié, de la dextrine, de la zéine, de la gomme laque et de la protéine lactosérique ; et facultativement
ii) un ou plusieurs seconds agents filmogènes choisis dans le groupe constitué de la maltodextrine, de l'amidon, du sucrose, du maltose, du fructose, du dextrose, du glucose, et du sirop de maïs ; dans laquelle (A) si le solvant est de l'eau, le second agent filmogène constitue de 5 à 35 % en poids de la composition de revêtement ; (B) si le solvant est un alcool, la composition comprend de 60 à 99,9 % en poids d'alcool, de 0,01 à 40 % en poids du premier agent filmogène, et de 0 à 35 % en poids du second agent filmogène ; et
(C) si le solvant est un mélange d'eau et d'alcool ; la composition comprend de 30 à 99,9 % en poids du solvant, de 0,01 à 40 % en poids du premier agent filmogène, de 0 à 40 % en poids du second agent filmogène, de 0 à 5 % en poids d'un tensioactif et de 0 à 2 % en poids d'un agent de conservation.

11. Utilisation selon la revendication 1, dans laquelle la composition de revêtement comprend en outre des colorants qui produisent un chocolat coloré ou un autre film coloré lorsque le revêtement est séché.

12. Utilisation selon la revendication 1, dans laquelle le produit appliqué est soumis à un rayonnement infrarouge.

13. Utilisation selon la revendication 1, dans laquelle l'étape (b) comprend une étape de séchage de la composition de revêtement dans un air ayant une température inférieure à 65 °C et une humidité relative inférieure à 50 %.

14. Utilisation selon la revendication 1, dans laquelle la composition de revêtement ne contient pas de colorants, et le film qui est formé lorsque la composition de revêtement sèche est transparent ou semi-transparent.

15. Utilisation selon la revendication 1, dans laquelle la composition de revêtement présente une teneur en matières solides de 0,1 à 70 pour cent en poids, de préférence de 1,0 à 70 pour cent en poids, plus préférablement de 1,0 à 60 pour cent en poids.

16. Utilisation selon la revendication 1, dans laquelle la composition de revêtement a une viscosité de 10 à 1 500 centipoises, de préférence de 100 à 1 500 centipoises, plus préférablement de 100 à 1 200 centipoises.
